# EUROPÄISCHE PATENTSCHRIFT

(11) **EP 1 422 809 B1**
(45) Veröffentlichungstag und Bekanntmachung des Hinweises auf die Patenterteilung: **13.12.2006**
(21) Anmeldenummer: 03022875.3
(22) Anmeldetag: 08.10.2003
(51) Int. Cl.: H02K 5/08, H02K 5/128, H02K 11/04, H02K 5/22

(54) **Elektromotor für einen Pumpenantrieb**
Electric motor for a pump drive
Moteur électrique pour entraîner une pompe

(30) Priorität: 22.11.2002 DE 10254670
(43) Veröffentlichungstag der Anmeldung: 26.05.2004
(73) Patentinhaber: Minebea Co. Ltd., Kitasaku-gun Nagano-ken (JP)
(72) Erfinder: Böttger, Axel, 01326 Dresden (DE); Kreiensen, Ullrich, 78652 Deisslingen (DE); Hans, Helmut, Dr., 78112 Sankt Georgen (DE); Rauer, Manfred, 78112 Sankt Georgen (DE)
(74) Vertreter: Liesegang, Eva

(56) Entgegenhaltungen:
- EP-A- 0 001 222
- EP-A- 0 357 913
- WO-A-93/08632
- DE-A1- 3 506 648
- DE-A1- 3 833 574
- DE-A1- 10 045 596
- DE-A1- 10 103 209
- DE-A1- 19 623 460
- DE-C1- 19 956 380
- GB-A- 966 156
- GB-A- 979 009
- GB-A- 987 265
- US-A- 3 859 548
- US-A- 5 644 178
- US-A- 6 028 386
- PATENT ABSTRACTS OF JAPAN Bd. 010, Nr. 008 (E-373), 14. Januar 1986 (1986-01-14) & JP 60 170437 A (MITSUBISHI DENKI KK), 3. September 1985 (1985-09-03)

## Beschreibung

Die Erfindung betrifft einen Elektromotor für einen Pumpenantrieb gemäß dem Oberbegriff von Patentanspruch 1. Ein solcher Elektromotor ist aus der EP-A-0 357 913 bekannt. Ähnlichen Stand der Technik zeigen die JP 60 170 437 A; die DE 199 56 380 C1; die US-A-5,644,178; die DE 196 23 460 A1; die DE 35 06 648 A1; die GB 987 265 A; und die EP-A-0 001 222.

Es ist bekannt, Elektromotoren für Pumpenantriebe als sogenannte Spalttopf-Motoren auszugestalten. Ein Spalttopfmotor ist ein Naßläufer-Motor, in dem der Rotor von einem einseitig geschlossenen Metalltopf umschlossen und von dem Fördermedium umspült ist. Der Metalltopf schützt den Stator, die Phasenwicklungen und gegebenenfalls im Motorgehäuse enthaltene Motorelektronik vor dem Fördermedium. Der Spalttopf ist hierbei in dem Luftspalt zwischen Rotor und Stator angeordnet. An dem offenen Stirnende des Spalttopfes ist die Motorwelle herausgeführt und mit einem Pumpenrad verbunden. Spalttopfinotoren sind z.B. beschrieben in DE 38 18 532 A1, DE 44 38 132 A1, DE 199 07 555 A1, DE 41 29 590 A1, EP 0 963 029 A2.

Im Stand der Technik sind auch Elektromotoren zum Antrieb von Förderpumpen bekannt, welche, beispielsweise durch ein abgedichtetes Lager und eine Wellendichtung, gegenüber dem Fördermedium vollständig isoliert sind. Hierbei ist der Motor in einem geschlossenen und abgedichteten Gehäuse angeordnet, aus welchem die Welle herausgeführt und mit dem Pumpenrad verbunden ist. Als Wellendichtung kann beispielsweise ein Wälzlager in Verbindung mit einem Simmerring dienen, um den Motor gegenüber dem Fördermedium zu isolieren. Solche Motoren haben den Nachteil, daß die Dichtungen zusätzliche Reibungsverluste erzeugen und störungsanfällig sind. Häufig ist die Dichtung eine der Haupt-Schwachstellen des Pumpenantriebs, wobei bei einer Beschädigung der Dichtung Fördermedium in den Motor eintreten und diesen letztendlich zerstören kann.

Es ist eine Aufgabe der Erfindung, einen Elektromotor für einen Pumpenantrieb anzugeben, der als sogenannter Naßläufer konzipiert ist. Naßläufermotoren, wie Spalttopfmotoren, können ohne die störungsanfälligen Wellen-Dichtungssysteme konzipiert werden. Das Fördermedium zirkuliert hierbei nicht nur in der Pumpe sondern auch in einem Teil des Motors, der dann seinerseits nach außen abgedichtet werden muß. Bei dem erfindungsgemäßen Motor soll eine zuverlässige Trennung des Teiles des Motorraumes, in dem das Fördermedium zirkuliert, von den weiteren Teilen des Motors, insbesondere dem Stator und der Elektronik, sichergestellt werden.

Allgemein ist es ferner eine Aufgabe der Erfindung, einen Elektromotor für einen Pumpenantrieb anzugeben, der klein ist, kostengünstig hergestellt werden kann und energiesparend betrieben werden kann. Insbesondere soll ein bürstenloser Gleichstrommotor zum Einsatz kommen, wobei die Erfindung hierauf nicht beschränkt ist.

Diese Aufgabe wird durch einen Elektromotor mit den Merkmalen von Anspruch 1 gelöst.

Vorteilhafte Ausführungsformen der Erfindung sind in den abhängigen Ansprüchen angegeben.

Erfindungsgemäß ist der Stator in einen Kunststoffkörper eingeschlossen, um ihn von dem Fördermedium der Pumpe zu trennen und vor diesem zu schützen. Dabei sind der Statorkern und die Phasenwicklungen vorzugsweise vollständig von dem Kunststoffkörper umschlossen, so daß lediglich die Phasenanschlüsse aus dem Kunststoffkörper herausgeführt sind. Der Kunststoffkörper ist vorzugsweise durch Spritzgießen hergestellt. Die Erfindung bildet somit ein geschlossenes, in den Kunststoffkörper eingebettetes elektromagnetisches System, wobei der Kunststoffkörper vorzugsweise so gebildet ist, daß er einen Raum zur Aufnahme des Rotors bereitstellt, der an einem Stirnende des Rotors geschlossen ist. An dem anderen Stirnende ist der Rotor mit dem Pumpenantrieb verbunden. Die Anschlüsse für die Phasenwicklungen sind vorteilhaft auf einer Seite aus dem Kunststoffkörper herausgeführt, die von dem Raum zur Aufnahme des Rotors abgewandt ist. Dadurch ist sichergestellt, daß der Raum zur Aufnahme des Rotors tatsächlich vollständig geschlossen ist und das Fördermedium nicht durch möglicherweise vorhandene Spalte kriechen kann.

Der Kunststoffkörper ist vorzugsweise so ausgebildet, daß er weitere Komponenten des Elektromotors, beispielsweise eine zweite Lagersitze zur Lagerung der Rotorwelle aufnehmen kann.

Ferner kann der Kunststoffkörper auch so ausgebildet sein, daß eine Befestigungseinrichtung für den Motor, wie ein Motorflansch oder andere Befestigungsmittel, direkt an den Kunststoffkörper angespritzt ist.

In einer bevorzugten Ausführungsform der Erfindung ist der Stator in einen Kunststoffkörper eingespritzt, der einen einseitig geschlossenen Raum zur Aufnahme des Rotors bildet. Hierbei ist der einseitig geschlossene Raum in einem einzigen Gießvorgang einteilig hergestellt. Aufgabe des Kunststoffkörpers ist es, den Antrieb für die Förderpumpe gegen das Fördermedium nach außen abzudichten und den Stator vor Umwelteinflüssen zu schützen. Gleichzeitig schafft der Kunststoffkörper eine definierte Positionierung und Fixierung der Phasenanschlüsse, die aus dem Kunststoffkörper herausgeführt sind.

Der Rotor und die Motorwelle können mit vormontierten Lagern von dem offenen Stirnende her in den durch den Kunststoffkörper gebildeten Raum geschoben werden, wobei die axiale Positionierung und Halterung der Motorwelle und des Rotors durch einen Formschluß mit einem Pumpengehäuse erfolgt, an welchem der Kunststoffkörper befestigt werden kann.

In einer anderen Ausführungsform der Erfindung bildet der Kunststoffkörper einen beidseitig offenen Raum zur Aufnahme des Stators, welcher an einem Stirnende durch einen Deckel verschlossen wird, der aus dem gleichen oder einem anderen Werkstoff hergestellt ist.

Die Erfindung ist im folgenden anhand bevorzugter Ausführungsformen mit Bezug auf die Zeichnungen näher erläutert. In den Figuren zeigen:
- Fig. 1: eine Schnittdarstellung durch eine erste Ausführungsform des erfindungsgemäßen Elektromotors;
- Fig. 2: eine Schnittdarstellung durch eine zweite Ausführungsform des erfindungsgemäßen Elektromotors;
- Fig. 3: eine auseinandergezogene perspektivisch Darstellung des erfindungsgemäßen Elektromotors gemäß der ersten Ausführungsform;
- Fig. 4A und 4B: eine Seitenansicht bzw. eine perspektivische Ansicht des Kunststoffkörpers des erfindungsgemäßen Elektromotors;
- Fig. 5A und 5B: eine auseinandergezogene Darstellung bzw. eine perspektivische Ansicht des Rotors des erfindungsgemäßen Elektromotors.

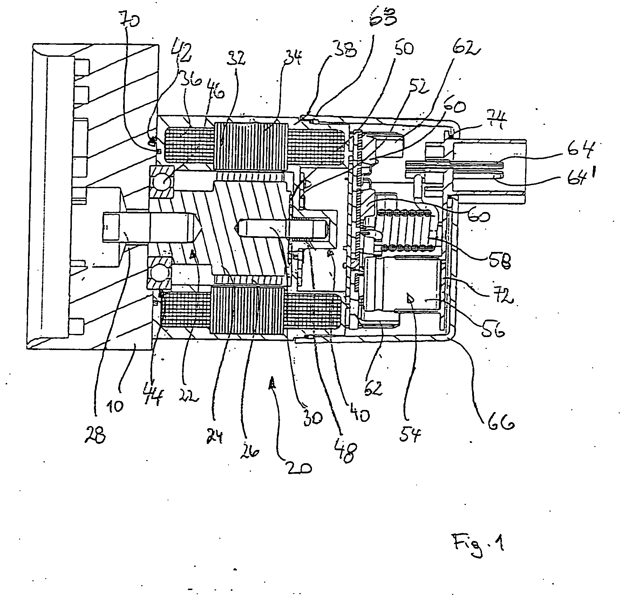

Fig. 1 zeigt einen Elektromotor gemäß einer ersten bevorzugten Ausführungsform der Erfindung in Schnittdarstellung. Der in Fig. 1 dargestellte Elektromotor ist als ein bürstenloser Gleichstrommotor realisiert, wobei die Erfindung allgemein auf alle Elektromotoren anwendbar ist, bei denen der Innenraum gegenüber dem Außenraum abgedichtet sein sollte und insbesonder auf solche, die als Naßläufer konzipiert sind.

In Fig. 1 ist ein Pumpengehäuse allgemein mit 10 bezeichnet. Das Pumpengehäuse 10 dient zur Aufnahme eines Pumpenrads (nicht gezeigt) und weist einen Einlaß sowie einen Auslaß für das Fördermedium auf. Da Förderpumpen im Stand der Technik allgemein bekannt sind, ist die Pumpe an sich hier nicht mit weiteren Einzelheiten beschrieben. Der erfindungsgemäße Elektromotor ist allgemein mit 20 bezeichnet. Er umfaßt einen Rotor 22, welcher einen Eisenrückschluß 24 und einen Permanentmagneten 26 aufweist. An den beiden Stirnende des Eisenrückschlusses 24 sind Wellenstummel 28, 30 mit dem Eisenrückschluß 24 drehfest verbunden. Die Wellenstummel 28, 30 sind vorzugsweise gehärtete Stahlstifte, können jedoch auch aus jedem anderen geeigneten Material hergestellt sein. Alternativ zu der gezeigten Ausführungsform kann eine durchgehende Welle (nicht gezeigt) vorgesehen sein, auf der der Eisenrückschluß des Rotors in üblicher Weise montiert ist.

Der Elektromotor 20 umfaßt ferner einen Stator 32, der einen Statorkörper 34 und Phasenwicklungen 36 aufweist. Der Statorkörper 34 kann als ein laminiertes Blechpaket aufgebaut sein.

Der Stator 32 ist insgesamt in einen Kunststoffwerkstoff eingespritzt, welcher einen Kunststoffkörper 38 bildet. Wie in Fig. 1 gezeigt, bildet der Kunststoffkörper 38 einen Raum zur Aufnahme des Stators 22, der einem ersten Stirnende 40 (in der Figur rechts) geschlossen ist. An dem gegenüberliegenden, zweiten Stirnende 42 ist der durch den Kunststoffkörper 38 gebildete Raum offen. An dem zweiten Stirnende 42 ist ein Lagersitz 44 in dem Kunststoffkörper 38 ausgebildet, der ein Wälzlager 46, insbesondere ein Kugellager, aufnimmt. Das Wälzlager 46 dient zur Lagerung des Rotors 22 in dem Kunststoffkörper 38.

An dem ersten Stirnende 40 ist zur Lagerung des Rotors 22 ein Gleitlager, beispielsweise ein hydrodynamisches Fluidlager, zwischen dem Wellenstummel 30 und einer Hülse 48 ausgebildet, welche in das Stirnende 40 des Kunststoffkörpers 38 integriert ist. Zur Ausbildung dieses Gleitlagers ist es zweckmäßig, den Wellenstummel 30 aus gehärtetem Stahl herzustellen. Hydrodynamische Fluidlager sind im Stand der Technik bekannt und beispielsweise beschrieben in dem U.S. Patent 4,934,8636. Werden andere Lagerarten gewählt, so kann auch die Welle aus einem anderen, weicheren Material bestehen.

Bei dem ersten Stirnende 40 ist eine Magnetscheibe 50 auf das Stirnende des Rotors 22 aufgesetzt, die als ein Signalgeber zur Erfassung der Lage und Drehzahl des Rotors 22 dient. Der Magnetscheibe 50 gegenüber ist, außerhalb des Kunststoffkörpers 38, eine Sensorplatine 52 angeordnet, welche Hall-Elemente oder andere Sensoren zur Erfassung der Drehlage und/oder Drehzahl des Rotors in Verbindung mit der Magnetscheibe 50 tragen kann.

Ebenfalls außerhalb des ersten Stirnendes 40 des Kunststoffkörpers 38 ist eine Elektronikbaugruppe angeordnet, allgemein mit 54 bezeichnet, welche zur Ansteuerung und Versorgung des Elektromotors 20 dient. Die Elektronikbaugruppe 54 umfaßt beispielsweise einen Pufferkondensator 56, eine Entstördrossel 58, FET-Leistungstransistoren 60 und Anschlußstifte 62 zur elektrischen Verbindung der Motorphasen, die bei der gezeigten Ausführungsform in Form von Metallzungen hergestellt sind. Die Elektronik-Baugruppe 54 umfaßt ferner nach außen führende Anschlußstifte 64, 64' zur Verbindung des Elektromotors 20 mit dem positiven und dem negativen Anschluß einer Stromversorgung, wobei einer der Anschlußstifte 64, wie in Fig. 1 gezeigt, direkt mit der Entstördrossel 38 verbunden ist.

Die Elektronik-Baugruppe 54 ist zwischen dem Kunststoffkörper 38 und einem Deckel 66 eingeschlossen, wobei der Deckel 66 gegen den Kunststoffkörper 38 über einen O-Ring 68 oder eine andere geeignete Dichtung abgedichtet ist. Eine weitere O-Ringdichtung 70 ist zwischen dem Kunststoffkörper 38 und dem Pumpengehäuse 10 vorgesehen. In den Deckel 66 ist ein Trägerbauteil 72 eingesetzt, das zur positionsgenauen Halterung verschiedener Komponenten der Elektronik-Baugruppe, wie der Anschlußstifte 64, 64', Kondensatoren 56 und dergleichen dient. Das Trägerbauteil 72 ist gegen den Deckel 66 mit einer weiteren O-Ringdichtung 74 abgedichtet.

Der Stator 32 ist, wie erläutert, in den Kunststoffkörper 38 vollständig eingespritzt, wobei der Kunststoffkörper bei dem ersten Stirnende 40 geschlossen ist. Vorzugsweise wird der einseitig geschlossene Kunststoffkörper 38 in einem Spritzvorgang als ein einteiliges Bauteil hergestellt. Der Kunststoffkörper 38 hat die Funktion der Abdichtung der gesamten elektromechanischen Baugruppe gegen das Fördermedium der Pumpe und des Schutzes der Statorbaugruppe 32 gegen jegliche Umwelteinflüsse von außen. Hierzu wird der Stator 32, mit Statorkörper 34 und Phasenwicklung 36 vorzugsweise vollständig verschaltet, bevor er umspritzt wird, so daß nur die Phasenanschlüsse, beispielsweise drei Anschlüsse bei einem dreiphasigen Motor, jedoch nicht die einzelnen Drähte der Wicklungen 36 aus dem Kunststoffkörper 38 herausgeführt sind.

Vorzugsweise sind erfindungsgemäß weitere Funktionen in dem Kunststoffkörper 38 integriert, wie Lagersitze und Befestigungselemente zur Verbindung des Kunststoffkörpers 38 mit dem Pumpengehäuse 10. Der Kunststoffkörper 38 kann auch zum Positionieren und Fixieren der Sensorplatine 52 sowie der Elektronik-Baugruppe 54 oder Teilen davon dienen. Es kann auch vorgesehen sein, in den Kunststoffkörper 38, insbesondere an dessen Außenseite, Metallteile zu integrieren, um den Elektromotor nach außen abzuschirmen. Hierzu können Metallpartikel, ein Metallgitter oder dergleichen beim Formen des Kunststoffkörpers 38 direkt mit eingespritzt werden.

Hauptfunktion des Kunststoffkörpers 38 ist jedoch die vollständig dichte Trennung des für das Fördermedium zugänglichen Raums zur Aufnahme des Rotors 22 von sämtlichen elektromechanischen Bauteilen.

Wollte man den Elektromotor gemäß der Erfindung mit den aus dem Stand der Technik bekannten Spalttopfinotoren vergleichen, so übernimmt der Kunststoffkörper 38, in welchen der Stator eingebettet ist, die Funktion des Spalttopfes und gleichzeitig wenigstens teilweise die tragende Funktion eines Gehäuses zur Positionierung weiterer Komponenten des Elektromotors sowie zur Befestigung des Elektromotors 20 an dem Pumpengehäuse 10. Zusätzlich schützt der Kunststoffkörper die Statorbaugruppe gegen Umwelteinflüsse von außen.

Die Erfindung ist sowohl auf Innenläufermotoren als auch auf Außenläufermotoren anwendbar.

In einer weiteren Ausführungsform der Erfindung könnte der Kunststoffkörper 38 auch das Pumpengehäuse 10 oder einen Teil davon ersetzen, indem das Pumpenrad (nicht gezeigt) direkt mit dem Rotor 22 verbunden und in dem Kunststoffkörper 38 aufgenommen wird. Mit anderen Worten kann ein Gehäuse für ein Pumpenrad unmittelbar an den Kunststoffkörper 38 angespritzt bzw. einteilig mit diesem ausgebildet werden.

Bei der in Fig. 1 gezeigten Ausführungsform übernimmt der Eisenrückschluß 24 des Rotors 22 wenigstens teilweise die Funktion einer Welle, so daß vorzugsweise gehärtete Stahlstifte als Wellenstummel 28, 30 verwendet werden können. Solche gehärteten Stahlstifte sind insbesondere bei Ausbildung eines oder beider Lager als Gleitlager, wie bei 48, zweckmäßig. Gehärtete Stifte sind als fertige Bauteile im Handel erhältlich. Alternativ kann selbstverständlich auch eine durchgehende Welle verwendet werden.

Die Ausbildung des Eisenrückschlusses 24 gemäß Fig. 1 hat den weiteren Vorteil, daß es einfacher ist, Kugellager, wie das Lager 46, in den Eisenrückschluß 24 zu integrieren. Insbesondere kann der Eisenrückschluß 24 mit einem solchen Außendurchmesser gestaltet werden, daß die Lagergröße an den Innendurchmesser des Kunststoffkörpers 38 angepaßt werden kann. Bei Verwendung einer durchgehenden Welle mit darauf aufgebrachtem Eisenrückschluß würde die gleiche Funktion erfordern, daß eine Welle mit extrem großem Durchmesser vorgesehen wird.

Der Rotor 22 mit dem Eisenrückschluß 24 und dem Permanentmagneten 26 ist mit einer möglichst glatten Oberfläche ausgebildet, um bei Drehung des Rotors in dem vom dem Kunststoffkörper 38 umschlossenen Raum möglichst geringe oder keine Verwirbelungen des Fördermediums entstehen zu lassen.

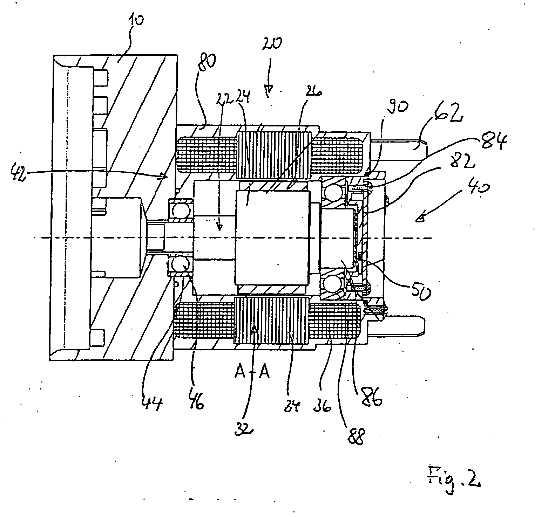

Fig. 2 zeigt eine Schnittdarstellung durch eine alternative Ausführungsform eines Elektromotors gemäß der Erfindung. Die gleichen oder entsprechende Komponenten wie in Fig. 1 sind mit denselben Bezugszeichen bezeichnet und hier nicht nochmals beschrieben. Die Elektronik-Baugruppe 54 und der Deckel 66 sind in Fig. 2 nicht gezeigt. Sie können wie in
Fig. 1 oder anders ausgebildet sein.

Die Ausführungsform der Fig. 2 unterscheidet sich von Fig. 1 im wesentlichen dadurch, daß der Stator 32 von einem Kunststoffkörper 80 umspritzt ist, welcher an beiden Stirnenden 40, 42 offen ist. An dem ersten Stirnende 40 ist der Kunststoffkörper 80 durch eine Abdeckung 82, die vorzugsweise ebenfalls aus Kunststoff besteht, verschlossen. Die Abdeckung 82 ist mit dem Kunststoffkörper 80 mittels Schrauben 84 oder durch andere Verbindungsmittel dicht verbunden. Die Abdeckung 82 ist gegen den Kunststoffkörper 38 über einen O-Ring 90 oder eine andere geeignete Dichtung abgedichtet.

Ferner ist bei der Ausführungsform der Fig. 2 der Rotor 22 auf einer Welle 86 über das Wälzlager 46 sowie ein weiteres Wälzlager 88 in dem Kunststoffkörper 38 gelagert.

Bei der Ausführungsform der Fig. 2 kann die Motorwelle 86 mit vormontiertem Rotor 20 und Lagern 46, 86 in der Zeichnung von rechts in den Kunststoffkörper 38 geschoben werden, der dann mit der Abdeckung 82 verschlossen wird. Die Abdeckung 82 fixiert über den Außenring des Wälzlagers 88 die Welle 86 in axialer Richtung.

Die Abdeckung 82 kann mit einer Sensorplatine (in Fig. 2 nicht gezeigt) vormontiert sein, welche Hall-Elemente oder andere Sensoren zur Erfassung der Drehlage und Drehgeschwindigkeit des Rotors 22 aufweisen. Wie bei der Ausführungsform der Fig. 1 ist an der Stirnseite 40 des Rotors 22 zu diesem Zweck eine Magnetscheibe 50 aufgebracht, welche Kommutierungssignale durch die Wandung der Abdeckung 82 hindurch an die Sensorplatine abgibt.

Das Wälzlager 46, insbesondere ein Kugellager, dient zur präzisen Zentrierung des Motors auf dem Pumpengehäuse 10. Dieses Kugellager 46 kann sowohl die Funktion der Motorlagerung als auch der Pumpenlagerung übernehmen. Gleiches gilt für das Kugellager 46 gemäß Fig. 1, wobei in Fig. 1 das zweite Lager als Gleitlager 48 ausgebildet ist.

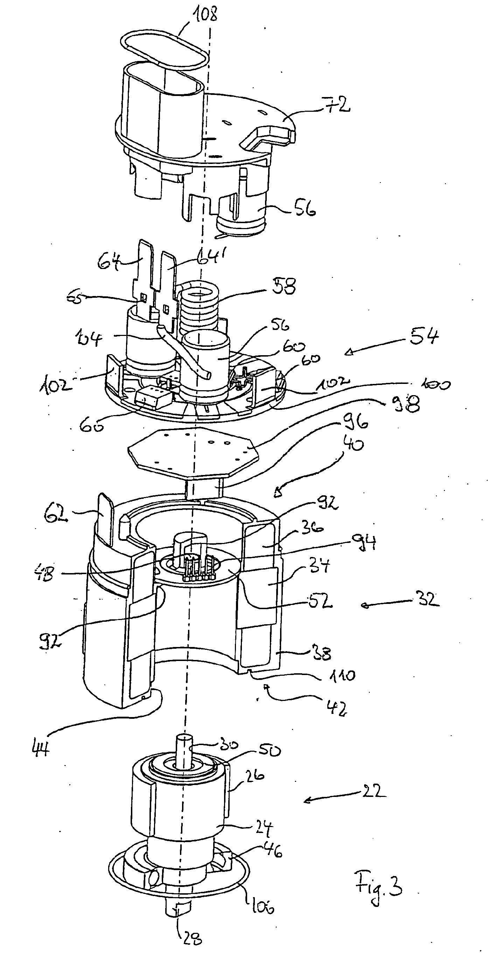

Fig. 3 zeigt eine auseinandergezogene perspektivische Darstellung des erfindungsgemäßen Elekromotors aus Fig. 1. Gleiche oder entsprechende Komponenten wie in Fig. 1 sind mit denselben Bezugszeichen bezeichnet. Allgemein ist in Fig. 3 der Rotor 22, der Stator 32, die Elektronik-Baugruppe 54 und das Trägerbauteil 72 zu sehen, welche bereits mit Bezug auf Fig. 1 beschrieben wurden. In Fig. 3 ist erkennbar, daß der Kunststoffkörper 38 einen einseitig geschlossenen Raum zur Aufnahme des Rotors 22 bildet, wobei dieser Raum an dem ersten Stirnende 40 durch eine Wand 92 geschlossen ist, die so geformt ist, daß sie den Wellenstummel 30 und die Gleitlager-Hülse 48 aufnehmen kann. Auf der Wand 92 ist die Sensorplatine 52 angeordnet, welche Verbindungsstifte 94 trägt. Die Verbindungsstifte 94 können mit einem Stecker 96 verbunden werden, der die auf der Sensorplatine 52 vorgesehene Sensorik mit den weiteren Bauelementen der Elektronik-Baugruppe 54 verbindet. Die Elektronik-Baugruppe 54 kann, wie im wesentlichen in Fig. 1 gezeigt, auf einer einzelnen Platine oder in mehreren Ebenen, beispielsweise auf zwei Platinen 98, 100 aufgebaut werden. Dabei können die Transistoren 60 so aufgebaut und angeschlossen werden, daß ihre Anschlußbeine wenigstens teilweise durch die obere Platine 100 hindurch gehen und mit der unteren Platine 98 direkt verbunden werden können. Bezüglich des Aufbaus der Elektronik-Baugruppe wird bezug genommen auf die deutsche Patentanmeldung vom 28.08.2002 mit dem Aktenzeichen 102 39 512.8.

In einer bevorzugten Ausführungsform der Erfindung sind die Anschlußstifte 62, welche unmittelbar mit den Phasenwicklungen 36 des Stators 32 verbunden sind, über Metallzungen 102 mit der Elektronik-Baugruppe 54 verbunden. Hierzu werden die Metallzungen 102 und die Anschlußstifte 62 nach dem Zusammenfügen der verschiedenen Komponenten des Elektromotors 20 zur Deckung gebracht und beispielsweise mit einer Schweißzange verbunden.

In alternativen Ausführungsformen könnte die Elektronik-Baugruppe 54 oder Teile davon außerhalb des Elektromotors angeordnet sein. Gleichfalls könnten die auf der Sensorplatine 52 befindliche Sensorik und die Elektronik-Baugruppe 54 zusammengefaßt werden.

Idealerweise wird bei der Erfindung ein vollständig abgeschlossener Elektromotor vorgesehen, der die für die Motorsteuerung notwendige Elektronik enthält, so daß lediglich Versorgungsanschlüsse in Form der Anschlußstifte 64, 64' nach außen geführt werden. Bei der gezeigten Ausführungsform ist der positive Versorgungsanschluß 64 unmittelbar mit der Entstördrossel 58 verbunden, wodurch eine mechanisch federnde Lagerung des Anschlußstiftes 64 geschaffen wird, die das Einfügen des Anschlußstiftes 64 in das Trägerbauteil 72 erleichtert. Die Entstördrossel 54 hat somit zusätzlich zu ihrer elektrischen Funktion eine mechanische Haltefunktion, die eine gewisse Beweglichkeit des Anschlußstiftes 64 zuläßt. Der andere, negative Versorgungsanschluß 64', kann über ein Kabelstück 104 mit einer der Metallzungen 102 zur Verbindung mit den Phasen 36 des Stators 32 gekoppelt werden. Beide Anschlußstifte 64 und 64' weisen Öffnungen 65 auf, welche mit korrespondierenden Rastnasen (nicht gezeigt) in dem Trägerbauteil 72 zusammenwirken.

Selbstverständlich ist es auch möglich, weitere Anschlüsse zur Steuerung und/oder Regelung des Elektromotors von außen mit der Elektronik-Baugruppe 54 zu verbinden und nach außen zu führen.

Zusätzlich zu der Darstellung der Fig. 1 zeigt Fig. 3 O-Ringe 106, 108 zur Abdichtung des Wälzlagers 46 gegen den Kunststoffkörper 38 bzw. des Trägerbauteils 72 gegen den Deckel 66. Ferner ist in Fig. 3 eine Nut 110 am zweiten Stirnende 42 des Kunststoffkörpers 38 dargestellt, die zur Aufnahme des O-Rings 70 dient.

Bei der in Fig. 3 gezeigten Ausführungsform sind die Komponenten der Elektronik-Baugruppe 54 über die Metallzungen 102 sowie weitere Metallschienen angeschlossen, die auf oder in der Platine 100 vorgesehen sind. Diese Leiterbahnen können als Lead-Frames oder als einzelne Anschlußbauteile realisiert sein.

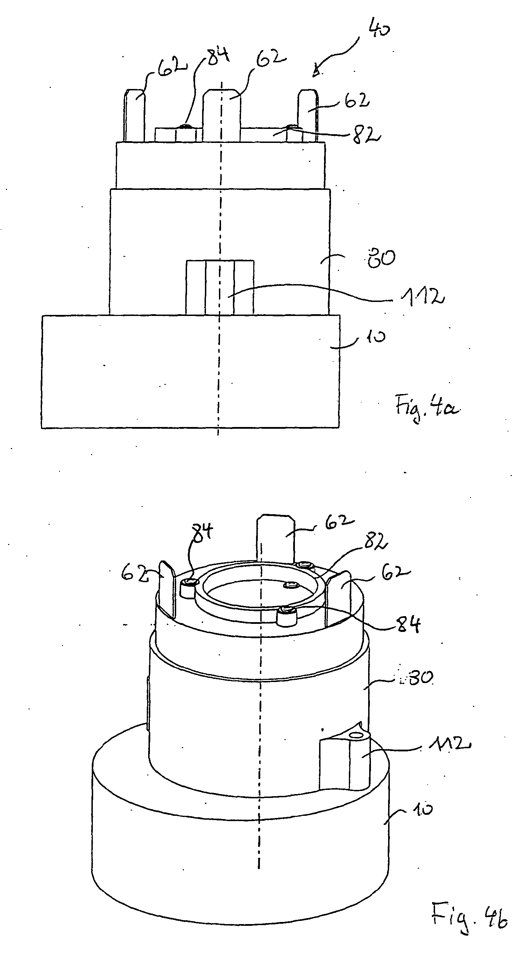

Fig. 4A und 4B zeigen eine Seitenansicht bzw. eine perspektivische Darstellung des Kunststoffkörpers 80, der auf dem Pumpengehäuse 10 montiert ist. Wie in den Fig. 4A, 4B dargestellt, führen aus dem Kunststoffkörper 80 nur die Anschlußstifte 62 für die drei Phasen der Phasenwicklungen 36 des Stators 32 heraus. Die in den Fig. 4A, 4B gezeigte Ausführungsform entspricht der Darstellung der Fig. 2, so daß der Kunststoffkörper 80 an dem ersten Stirnende 40 durch die Abdeckung 82 verschlossen ist. Die Abdeckung 82 ist mit dem Kunststoffkörper 80 über Schrauben 84 verbunden. Ferner ist in den Fig. 4A, 4B gezeigt, daß der Kunststoffkörper 80 mit Befestigungsmitteln 112 nach Art eines Flansches ausgebildet ist, um den Kunststoffkörper 80 direkt mit dem Pumpengehäuse 10 zu verbinden.

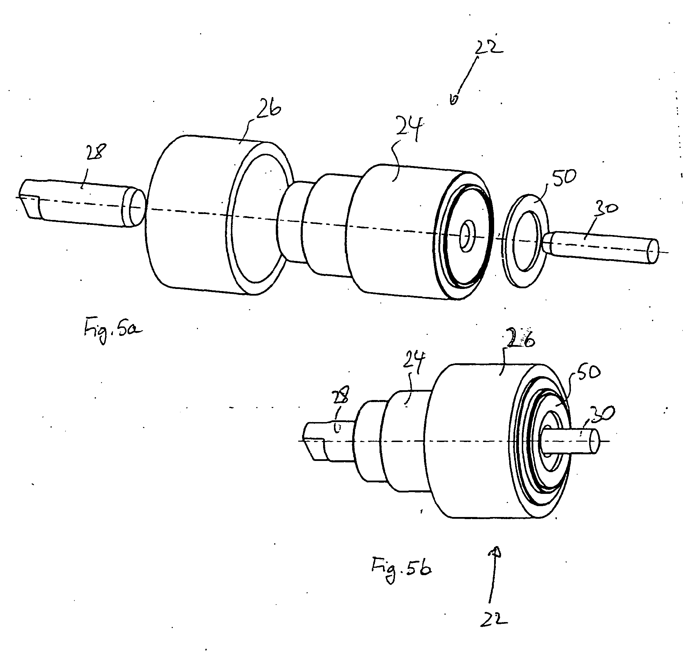

Fig. 5A, 5B schließlich zeigen in einer auseinandergezogenen Darstellung sowie in einer perspektivischen Gesamtdarstellung den Rotor 22 des Elektromotors der Fig. 1. Dieselben oder gleiche Bestandteile wie in Fig. 1 sind mit denselben Bezugszeichen bezeichnet.

Der erfindungsgemäße Elektromotor wird vorzugsweise als Antrieb für eine Hydraulik-Lenkhilfe in Kraftfahrzeugen eingesetzt, er eignet sich jedoch grundsätzlich als Pumpenmotor oder, als Naßläufer für verschiedenste Anwendungen.

Die in der vorstehenden Beschreibung, den Ansprüchen und den Zeichnungen offenbarten Merkmale können sowohl einzeln als auch in beliebiger Kombination für die Verwirklichung der Erfindung in den verschiedenen Ausgestaltungen von Bedeutung sein.

### Bezugszeichenliste

- 10: Pumpengehäuse
- 20: Elektromotor
- 22: Rotor
- 24: Eisenrückschluß
- 26: Permanentmagnet
- 28, 30: Wellenstummel
- 32: Stator
- 34: Statorkörper
- 36: Phasenwicklungen
- 38: Kunststoffkörper
- 40: erstes Stirnende
- 42: zweites Stirnende
- 44: Lagersitz
- 46: Wälzlager
- 48: Gleitlager - Hülse
- 50: Magnetscheibe
- 52: Sensorplatine
- 54: Elektronik-Baugruppe
- 56: Pufferkondensator
- 58: Entstördrossel
- 60: FET-Leistungstransistor
- 62, 64, 64': Anschlußstifte
- 65: Öffnung
- 66: Deckel
- 68, 70: O-Ring
- 72: Trägerbauteil
- 74: O-Ring
- 80: Kunststoffkörper
- 82: Abdeckung
- 84: Schraube
- 86: Welle
- 88: Wälzlager
- 90: O-Ring
- 92: Wand
- 94: Verbindungsstifte
- 96: Stecker
- 98, 100: Platinen
- 102: Metallzungen
- 104: Kabelstück
- 106, 108: O-Ringe
- 110: Nut
- 112: Befestigungsmittel

## Patentansprüche

1. Elektromotor für einen Pumpenantrieb mit einem Stator (32) und einem Rotor (22) zum Antreiben eines Pumpenrades, wobei der Stator in einen Kunststoffkörper (38; 80) eingebettet ist und der Kunststoffkörper (38; 80) zusammen mit dem Stator (32) einen Raum bildet, in dem der Rotor aufgenommen ist, wobei der Raum an einem ersten Stirnende (40) des Rotors (22) geschlossen ist und der Rotor (22) an seinem gegenüberliegenden zweiten Stirnende (42) mit dem Pumpenrad verbunden werden kann, **dadurch gekennzeichnet, daß** bei dem zweiten Stirnende (42) ein Lagersitz zur unmittelbaren Aufnahme eines Wälzlagers (46) zur Lagerung des Rotors in eine Innenwand des Raumes integriert ist.

2. Elektromotor nach Anspruch 1, **dadurch gekennzeichnet, daß** der Kunststoffkörper (38; 80) durch Spritzgießen hergestellt ist.

3. Elektromotor nach Anspruch 1 oder 2, **dadurch gekennzeichnet, daß** der Kunststoffkörper (38), der den Stator (32) umgibt, einen an dem ersten Stirnende (40) geschlossenen Raum bildet, der in einem Gießvorgang einteilig hergestellt ist.

4. Elektromotor nach Anspruch 1 oder 2, **dadurch gekennzeichnet, daß** der Kunststoffkörper (80), der den Stator (32) umgibt, einen an beiden Stirnenden (40, 42) offenen Raum bildet, der bei dem ersten Stirnende (40) durch eine Abdeckung (82) verschlossen ist.

5. Elektromotor nach einem der vorangehenden Ansprüche, **dadurch gekennzeichnet, daß** der Rotor (22) auf einer Welle (28, 30) sitzt, die bei dem ersten Stirnende (40) durch ein Gleitlager (48) gelagert ist.

6. Elektromotor nach einem der vorangehenden Ansprüche, **dadurch gekennzeichnet, daß** der Rotor (22) einen Eisenrückschluß (24) aufweist, der an den beiden Stirnenden mit Wellenstummeln (28, 30) verbunden ist.

7. Elektromotor nach einem der vorangehenden Ansprüche, **dadurch gekennzeichnet, daß** der Stator (32) einen Statorkern (34) und PhasenWicklungen (36) aufweist, welche mit jeweils einem Anschlußmittel (62) für jede Phase verbunden sind, wobei der Kunststoffkörper (38; 80) den bewickelten Stator (32) so umschließt, daß nur die Anschlußmittel (62) zugänglich sind.

8. Elektromotor nach einem der vorangehenden Ansprüche, **dadurch gekennzeichnet, daß** der in dem Raum aufgenommene Rotor (22) bei Betrieb des Elektromotors in Verbindung mit einer Pumpe von einem Fördermedium umspült ist.

9. Elektromotor nach einem der vorangehenden Ansprüche, **gekennzeichnet durch** eine Elektronik (54) zur Ansteuerung des Elektromotors (20), die außerhalb des Raumes angeordnet ist.

10. Elektromotor nach Anspruch 8 und 9, **dadurch gekennzeichnet, daß** die Elektronik (54) durch den Kunststoffkörper (38; 80) von dem Fördermedium getrennt ist.

11. Elektromotor nach Anspruch 7 und 9, **dadurch gekennzeichnet, daß** die Anschlußmittel (62) für jede Phase des Elektromotors eine Kontaktzunge aufweisen und die Elektronik (54) entsprechende Kontaktzungen (102) aufweist, welche neben den Kontaktzungen der Anschlußmittel (62) zu liegen kommen, um diese miteinander zu verbinden.

12. Elektromotor nach einem der vorangehenden Ansprüche, **dadurch gekennzeichnet, daß** wenigstens in Teile des Kunststoffkörpers (38; 80) Metallteile integriert sind, um den Elektromotor (20) nach außen abzuschirmen.

## Claims

1. Electric motor for a pump drive, including a stator (32) and a rotor (22) for driving a pump impeller, the stator being embedded in a plastic body (38; 80) and the plastic body (38; 80) forming a chamber together with the stator (32) in which the rotor is received, the chamber being closed at one shaft end (40) of the rotor (22) and the rotor (22) being connected at the opposite second shaft end (42) to the pump impeller, **characterized in that** a bearing seat for receiving a roller bearing (46) to support the rotor is integrated in an interior wall of the chamber at the second shaft end (42).

2. Electric motor according to claim 1, **characterized in that** the plastic body (38; 80) is manufactured by injection molding.

3. Electric motor according to claim 1 or 2, **characterized in that** the plastic body (38) which surrounds the stator (32) forms a chamber closed at the first shaft end (40), integrally formed in one molding procedure.

4. Electric motor according to claim 1 or 2, **characterized in that** the plastic body (80) which surrounds the stator (32) forms a chamber open at both shaft ends (40, 42) which is closed with a cover (82) at the first shaft end (40).

5. Electric motor according to one of the preceding claims, **characterized in that** the rotor (22) is fitted on a shaft (28, 30) which is supported by a journal bearing (48) at the first shaft end (40).

6. Electric motor according to one of the preceding claims, **characterized in that** the rotor (22) is equipped with a coil flux guide (24) connected to shaft stub ends (28, 30) at both shaft ends.

7. Electric motor according to one of the preceding claims, **characterized in that** the stator (32) has a stator core (34) and phase windings (36), each connected to a connection means (62) for each phase, the plastic body (38; 80) surrounding the wound stator (32) in a manner which allows only the connection means (62) to be accessible.

8. Electric motor according to one of the preceding claims, **characterized in that** the rotor (22) received in the chamber when operating the electrical motor in connection with a pump is immersed in the pumping medium.

9. Electric motor according to one of the preceding claims, **characterized by** an electronic module (54) for electrical motor (20) actuation which is located outside the chamber.

10. Electric motor according to claims 8 and 9, wherein the electronic module (54) is separated from the pumping medium by the plastic body (38; 80).

11. Electric motor according to claims 7 and 9, wherein the connection means (62) for each phase of the electrical motor has a contact lug, and the electronic module (54) has suitable contact lugs (102), these coming to rest next to the connection means (62) contact lugs for connection thereof.

12. Electric motor according to one of the preceding claims, **characterized in that** at least part of the plastic body (38; 80) has metal parts integrated in it to shield the electrical motor (20) against outside influences.

## Revendications

1. Moteur électrique pour entraîner une pompe avec un stator (32) et un rotor (22) pour l'entraînement d'une roue de pompe, dans lequel le stator est intégré dans un corps en plastique (38 ; 80) et le corps en plastique (38 ; 80) forme avec le stator (32) un espace dans lequel le rotor est logé, l'espace étant fermé à une première extrémité frontale (40) du rotor (22) et le rotor (22) pouvant être relié à la roue de la pompe à sa deuxième extrémité frontale (42), **caractérisé en ce qu'**à la deuxième extrémité frontale (42), un siège de roulement est prévu, dans une paroi intérieure de l'espace, pour recevoir directement un roulement à rouleaux (46) destiné à supporter le rotor.

2. Moteur électrique selon la revendication 1, **caractérisé en ce que** le corps en plastique (38 ; 80) est fabriqué par moulage par injection.

3. Moteur électrique selon la revendication 1 ou 2, **caractérisé en ce que** le corps en plastique (38) qui entoure le stator (32) forme un espace fermé à la première extrémité frontale (40), qui est fabriqué d'un seul tenant pendant une opération de coulée.

4. Moteur électrique selon la revendication 1 ou 2, **caractérisé en ce que** le corps en plastique (80) qui entoure le stator (32) forme un espace ouvert aux deux extrémités frontales (40, 42), qui est fermé par un couvercle (82) à la première extrémité frontale (40).

5. Moteur électrique selon l'une des revendications précédentes, **caractérisé en ce que** le rotor (22) est posé sur un arbre (28, 30) qui est supporté à la première extrémité frontale (40) par un palier de glissement (48).

6. Moteur électrique selon l'une des revendications précédentes, **caractérisé en ce que** le rotor (22) comporte un corps fermé en fer (24) qui est reliée à des tronçons (28, 30) aux deux extrémités frontales.

7. Moteur électrique selon l'une des revendications précédentes, **caractérisé en ce que** le stator (32) possède un induit de stator (34) et des enroulements de phase (36), qui sont reliés chacun à un moyen de connexion (62) pour chaque phase, le corps en plastique (38 ; 80) entourant le stator enroulé (32) de telle manière que seuls les moyens de connexion (62) soient accessibles.

8. Moteur électrique selon l'une des revendications précédentes, **caractérisé en ce que** le rotor (22) logé dans l'espace est baigné par un fluide pompé lorsque le moteur électrique fonctionne en relation avec une pompe.

9. Moteur électrique selon l'une des revendications précédentes, **caractérisé en ce qu'**il possède un dispositif électronique (54) pour l'activation du moteur électrique (20) qui est disposé à l'extérieur de l'espace.

10. Moteur électrique selon les revendications 8 et 9, **caractérisé en ce que** le dispositif électronique (54) est séparé du fluide pompé par le corps en plastique (38 ; 80).

11. Moteur électrique selon la revendication 7 et 9, **caractérisé en ce que** les moyens de connexion (62) présentent une languette de contact pour chaque phase du moteur électrique et le dispositif électronique (54) présente des languettes de contact (102) correspondantes, qui se placent contre des languettes de contact des moyens de connexion (62) pour connecter celles-ci entre elles.

12. Moteur électrique selon l'une des revendications précédentes, **caractérisé en ce que** des pièces métalliques sont intégrées au moins dans certaines parties du corps en plastique (38 ; 80) pour blinder le moteur électrique (20) vis-à-vis de l'extérieur.
